# EUROPEAN PATENT SPECIFICATION

(11) **EP 3 678 858 B1**
(45) Date of publication and mention of the grant of the patent: **24.05.2023**
(21) Application number: 19769214.8
(22) Date of filing: 05.07.2019
(51) Int. Cl.: B31B 70/00, B31B 70/16, B31B 70/10

(54) **DEVICE AND METHOD FOR MANAGING DEFECTS IN A WEB MATERIAL ON CONVERSION LINES**
VERFAHREN UND VORRICHTUNG ZUR HANDHABUNG VON FEHLERN IN EINER WARENBAHN EINER VERARBEITUNGSANLAGE
DISPOSITIF ET PROCÉDÉ DE GESTION DE DÉFAUTS DANS UN MATÉRIAU EN BANDE SUR DES LIGNES DE CONVERSION

(30) Priority: 08.07.2018 IN 201811020878
(43) Date of publication of application: 15.07.2020
(73) Proprietor: LOHIA CORP LIMITED, Kanpur 208 022 (IN)
(72) Inventor: LOHIA, Siddharth, Kanpur 208 022 (IN)
(74) Representative: Müller-Boré & Partner Patentanwälte PartG mbB
(86) International application number: PCT/IB2019/055747
(87) International publication number: WO 2020/012311

(56) References cited:
- WO-A1-2009/121841
- WO-A1-2018/055856

## Description

### Field Of Invention

The invention relates to a device for managing defects in a web material on conversion lines. In particular, the device relates to identifying defective sections of web/web material and rejecting the defective pieces before they enter the downstream processes of a conversion line, such as bag making.

### Background Of Invention

Many powdery or bulkable consumer goods today are filled, stored and transported in bags made of web material like plastic woven web material or non-woven material. It is essential that the bags made of web material that are used meet the quality requirements for the respective purpose of use.

Web material bags for the packaging of particulate goods such as, for example, cement have to be sufficiently firm and dust-tight in order to prevent contamination or exit of particles, respectively, during the process of filling, storage as well as transportation and, hence, also contribute to the protection of the environment. Web material bags for the packaging of free-flowing chemicals, furthermore, have to meet in addition strict requirements in terms of occupational safety as well as requirements regarding the resistance of the material used against weather influences.

The web material may have various defects along its length. Defects may include weaving defects, holes or surface defects, uneven coating edges, web material ends stuck together, printing defects, or other similar defects. Some defects may be of cosmetic nature; however some others may compromise integrity and strength of the web/web material or affect its other desirable properties such as leak-proofness, ultimately rendering it unsuitable for the purpose for which is designed. Downstream processing of the defected web/web material results in defected bags which need rejecting. Worse still, if such defected bags do not get rejected, they may be filled with material leading to spillage and wastage of material

Producers and traders, respectively, of packaging bags made of web material are increasingly facing the problem that operators of automated filling plants detect a flawed bag in the course of incoming goods inspections on a random basis, so that a complete pallet or charge of hundreds or thousands of plastic bags will be reclaimed and will have to be taken back by the supplier. The economic damage arising thereof is tremendous.

Because of fast running processing machines, which will achieve web conveying rates of up to 300 m/min, a complete and purely optical inspection in regard to defects by the operating personnel is virtually impossible.

Many solutions are available in the prior art for detecting defects in web material, some of them are given as follows:
WO 2018/055856 A1 relates to a device and method for eliminating a defective sheet in plate-shaped cardboard sheets in which at least a bottom liner, a corrugated medium paper, and a top liner are bonded together and an apparatus for manufacturing a cardboard sheet, which is provided with the device for eliminating a defective sheet.

WO 2005/085813 A1 relates to a device for monitoring a moving web of material at a textile machine, wherein a line sensor is arranged for scanning the web of material along its width. A sensor signal of the line sensor, for example a CCD-opto-electric line sensor, is then processed by an electronic circuit into a configurable starting signal that triggers an action. Such a starting signal is suited to trigger, for example, the shut-down of the drive means for the web of material or the initiation of an optical or acoustic alarm.

From DE 43 12 452 A1 there is known a method for optically determining quality-defining parameters of textile surfaces by means of imaging sensors. Therefore, the textile surface is detected section-wise by a line camera, and the digital image is subsequently analyzed in regard to homogeneity, orientation as well as number of the meshes and trebles or weft and warp threads, respectively, of the periodically structured web of material or knitted goods.

DE 33 04 817 A1 discloses a method for automatically detecting flaws in textile web materials using image filtration in order to increase the contrast between the global texture that is considered normal for the textile to be examined and the local deviations that are considered as flawed. Therefore, there are used at least two spatial filters for image transformation that are adjusted to the detection of straight-lined contour elements. Error signals obtained via digital image filtration are thus stored and analyzed by a down-stream processor.

One of the conventional approaches of individual bag producers is to detect defects in the material already during the production stage of a plastic woven textile, like printing or coating and to label these defects by means of coloured marks or print marks as given in WO 2009/121841 A1, have not been fully successful due to number of factors. Firstly, the marking of defects is done at printing stage or coating stage, which is prior to the conversion machine. Then on the conversion machine, special units are installed for detecting the marking/labels post in previous operation and the rejecting cut web in accordance. However, this system involves modification or changes in at least two different machines. Further, the wastage of web is in higher amount and system is not reliable.

A coloured marking of a defect, for example at a flat web of material, which in the subsequent process steps of the bag production is formed or closed, respectively, into a web material tube, may thus later on be situated on the inside of this web material tube and will thus not be detected in a down-stream optical quality control. The same is effective for coloured marks which, if the plastic webs in the course later on are printed on, will not be detectable anymore. Furthermore, depending on the customer's requirements, there is to be distinguished which defect sizes are to be eliminated. Large-scale or long defects occurring along several metres of a section of the plastic woven web material are more prone to be detected by the operating personnel than small-scale defects.

According to US patent application US 2012/0133763 A1 an inspection camera is provided for taking images of the plastic woven web material, and an analysis unit, which detects irregularities in the weaving pattern of the plastic woven web material on the basis of the images taken by the inspection camera and which, when detecting irregularities in the weaving pattern indicating a defected section of the plastic woven web material, triggers an error signal, which actuates, for example, a flashing light or a horn, or which can be fed to a higher-level machine controller. There are further provided an inspection system for monitoring defects of a plastic woven web material as well as variants of a method for labelling or monitoring, respectively, defects of a plastic woven web material.

A drawback of this approach is that labelling of defected areas of web material on a high speed processing unit is a cumbersome and complex operation. Also, further processing of the areas of web material identified as defective, particularly separating them from the defect-free sections is manual - which will involve stoppage of the advancing web.

A simple and reliable system has not been known from the prior art for:
- detecting a defective section of a web material web material, the sensitivity of which in regard to the defect detection may be adjusted according to the customer's requirements,
- rejecting all defective web material of web material under process before entering the bag conversion line.

Thus there is a need to provide a system/device and method of web material defects management including their detection and separating the defective areas of web material from defect-free web material without stopping the advancing web material such that it overcomes the known disadvantages of the prior arts web inspection system.

There is also a need to provide a device for managing defects in a web material like plastic woven web material made of monoaxially drawn polymer ribbons, in particular polyolefin ribbons, preferably polypropylene ribbons, which is optionally coated with a thermoplastic material on one or two sides, wherein in order to monitor irregularities, which are characteristic of defected sections of a typical plastic woven web material

A further need of the state of the art is to provide a device that can identify the web material cut pieces which contain the detected defects and send them to a rejects collection zone without allowing them to enter the downstream bag manufacture units.

Finally, there is a need to provide a device that meets the aforementioned needs by providing a device for detecting defected areas of web material, wherein the co-ordinates of the defected areas are noted in control unit, and the progress of the defected areas of web material down the conveyor belt is monitored, through the control of web cutting unit, the web material piece/length containing defects are identified and cut in accordance, and finally where the cut pieces containing defects are sent to a rejects collection unit whereas normal (defect-free) cut pieces are sent down to downstream processing units.

### Objects of Invention:

One object of the invention is to provide a defect management device which identifies structural defects and defects of printing in advancing web material.

Another object of the invention is to provide a defect management device that registers the defective stretches of the advancing web material in a database and physically separates them from defect-free web material.

A further object of the invention is to separate the defective web material from the defect-free web material without stopping the advancing web material.

A further object of the invention is to provide the management device at any location before a transverse cut is made in the web material.

### Brief description of figures

Figure 1 shows a plan-view schematic of the invention
Figure 2 shows a side-view schematic of the invention
Figure 3 shows a schematic of web material with defects
Figure 4 shows a schematic of defect-free and defective sections on web material
Figure 5 shows a schematic of communication between control units of defects detection management device and the conversion line control unit
Figure 6 shows the entire width of the web material
Figures 7A and 7B shows the computer images of the defect-free portions of web material as scanned by the device of invention - for both web material with printed pattern and without it.
Figures 8 shows the computer images of the defective portions of web material as scanned by the device of invention - for web material without print pattern
Figures 9 shows the computer images of the defective portions of web material as scanned by the device of invention - for web material with print pattern

### List Of Parts:

1 - Web material; la - web material roll; 1b - defect-free piece; 1c - defective piece; 1d - main material; 1e - edge region
2 - Defects
3 - Web material defects management system or device
4 - Defects detection unit
5 - Defects management control unit
6 - Conversion line; 6a - downstream processing units
7 - defective sections of web material
8 - defects-free sections of web material
9 - Print design pattern
10 - Rejection system; 10a - rejects collection zone
11 - web material feed roller
12 - light sensing device
13 - light emitting device
14 - feed rollers; 14a - feed zone
15 - conversion line control unit
16 - cutting station; 16a - cutter
17 - transport table or conveyor belt
18 - Nip roller
L_{D} - length of defective section
l - length between two consecutive defects
L - Predetermined length of web material piece required for final product
C1, C2, C3, C'1, C"1 - possible positions of cuts
D1, D2, D3 - defects within the main web material
E₀, E1 - defects within the edge region
Wm - width of main web material
We - edge region of web material
W_{T} - total width of the web material

### Summary of Invention:

The invention relates to a device to manage defects (defects management device) in advancing web material provided on a conversion line, said device comprising the features of claim 1. Said conversion line having processing stations for making bags from said web material, said processing stations comprising at least one or more combinations of any of following units like a cutting station, a folding station, a base opening station, a base closing station, a coversheet station, a valve-making station, a stitching/seaming/sealing station, a stacking station. Depending on the purpose of the conversion line, there would be other processing stations.

In a key aspect of the invention, the defects management device comprises a defects detection unit, and a defects management control unit which monitor progress of the defect on the traveling web material and subsequently identifies the section of the of web material containing the defect to be cut, the defects management control unit also communicates with:
a. the control unit of the conversion line which controls the cutting of the defective sections of the web material, and
b. with a unit that separates defective piece(s) from the process flow of the downstream process of the conversion line and send them to a rejects collection zone.

The cut pieces of defects-free material proceed on to a transport table and are taken to the various further processing stations of the device.

The invention further relates to a method to manage defects in advancing web material provided on a conversion line, the method comprising the features of claim

Accordingly, a system/device and method of web material defects management which comprises detection of defects and of separating the defective areas of web material from defect-free web material without stopping the advancing web material is provided such that it overcomes the known disadvantages of the prior arts web inspection system.

The device of the invention is suitable for detecting defects in a web material like plastic woven web material made of monoaxially drawn polymer ribbons, in particular polyolefin ribbons, preferably polypropylene ribbons, which is optionally coated with a thermoplastic material on one or two sides, it may be also optionally be printed or laminated with printed film or any combination thereof wherein in order to monitor irregularities, which are characteristic of defected sections of a typical plastic woven web material.

The device/method also identifies cut pieces of the web material which contain the detected defects and sends them to a rejects collection zone without allowing them to enter the downstream bag manufacture units or the conversion line.

### Detailed description of invention

A reliable device to detect and manage defects in web material (1) (defects detection and management system or device) is disclosed. It is provided on a conversion line, said conversion line having processing stations for making bags from said web material (1), said processing stations may be comprising at least one of following unit/station like, web unwinding station, cutting station, a folding station, a base opening station, a base closing station, a coversheet station, a valve-making station, a stitching station or a sealing station, characterised in that said device comprises a defects detection unit, and a defects management control unit which monitors progress of the defect on the traveling web material (1) and subsequently identifies the section of the of web material (1) containing the defect to be cut, the defects management control unit also communicates with:
a. the control unit of the conversion line which controls the cutting of the defective sections of the web material (1), and
b. with a unit that separates defective piece(s) from the process flow of the downstream process of the conversion line and send them to a rejects collection zone.

It includes a unit (3) to detect defects and a defects management control unit (5) that manages defects on the traveling web material (1). The defects management device (3) of the invention is provided within a typical automated bag conversion line (6) where storage bags or sacks are made from flat or tube type web material (1). The defects management device (3) of the invention may also be provided on any conversion line (6) to make products from a flat or tubular web. The final product may be bags or simply cut pieces of web material (1). The cut pieces (1b) of defects-free material proceed on to a transport table (17) and are taken to the various further processing stations of the device.

The defects detection unit (4) may include camera/infrared sensors/thickness sensors or even image processing devices that serve as a light sensing device (12). The defects management control unit (5) comprises controls that registers the detected defects (2) in a database (3a), calculates the time of their detection and, calculates and stores the positions of the defects (2) along the traveling web where transverse cuts need to be made to convert the web material (1) into pieces. According to the speed of travel of the web material (1), the defects management control unit (5) calculates the speed and position of the traveling defects (2). According to the type of the web material (1) - i.e. printed or plain, and the final product requirement, the defects management control unit (5) calculates the position of the transverse cuts to be made in the web material (1). The printing may carry a print design pattern or unpatterned design.

The conversion line (6) may include a rejection system where the pieces (1c) of the web material (1) identified as defective are separated from the flow of the defect-free pieces (1b) so that the downstream product-making processes of the conversion line (6) may take place uninterrupted or without problems.

The web defects management device (3) of the invention allows the process of detection of defects (2) and cutting the web material (1) into pieces without stopping the traveling web material (1).

For the purpose of this disclosure, the term defects management includes tasks such as identification of defects, calculating and monitoring their location along the travelling web (1), monitoring and controlling the movement of the cutter of the bag conversion line (6) on which the web material (1) is processed into final product, separating the defective pieces (1c) of the web material (1) from the defect-free pieces (1b) of the web material (1).

The term defect (2) refers to any unacceptable irregularities in the web material (1) from the perspective of the suitability for purpose for which the web material (1) is intended. Defects (2) may be uneven thickness variation, holes, uneven pattern, missing warp end, missing weft; crushing of weft; uneven coating edge trim, web joints, one or more layer of web; foreign particles, or any combination of these defects.

The terms web material, web and fabric are used interchangeably in the following description.

The web material (1) may be in the form of plastic film, non-woven material, paper, woven web material, woven plastic web material, or a composite material made from any of these materials. It may also be coated or laminated with plain or printed film, or printed, or any combination of thereof.

Web materials - either in flat form or tubular form - are used for many purposes including making storage bags. Storage bags are typically made using an automatic or semi-automatic web conversion lines (6) (which converts web materials into bags). These systems may have any or all of the individual machines such as a cutting machine, folding/forming machine, stitching machine, valve forming machine. The conversion lines (6) may also include block bottom bag making or pouching forming machines. The web material defects management device (3) may be adapted by a person skilled in the art for use in any of these conversion systems. In particular, the placement of the device of invention on any of these conversion systems may be according to the choice of the user, although it is preferable that it is placed upstream of a cutting operation.

The bag conversion lines or any other conversion lines that make products using web materials (1) may also have individual stations to perform operations such as making perforations or holes, joining, folding operations. The defective web material (1) - if not identified on time, or if allowed to travel to any such processing stations - may damage processing equipment. Therefore, it is important that any such operations are carried out only after the defective portions/sections of web material (7) are separated from the defect-free sections (8) of web material and taken out of the process flow. This is to ensure that the process flow moves smoothly with no damage to any of the process stations.

However, if there are any of pre-cutting operations like web perforation or holes making, then these operations are disengaged on detection of defective portion in web. Disengagement and engagement of the cutter and the pre-cutting operations is controlled by the controllers (5, 15) of the defects management device (3) and the conversion line (6) in communication with each other.

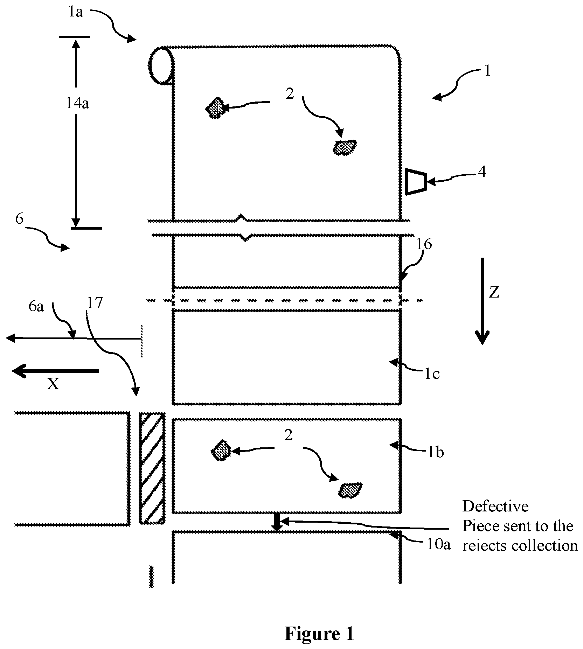

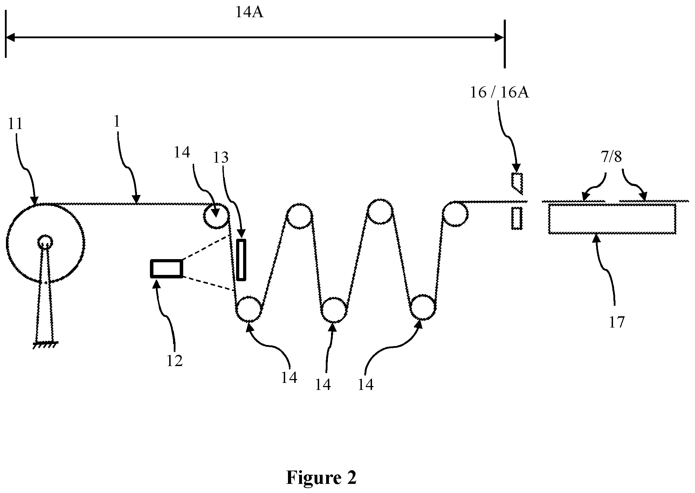

The defects management device (3) works in tandem with the bag conversion line (6). The defects management device (3) has a control unit (5) of its own which is capable of communicating with the control unit of a typical bag conversion unit. Figure 1 shows a plan-view schematic of a bag-making production line comprising a web material feed station and a cutting section (16) and a bag forming/joining section (not shown). In one aspect of the invention, a defects detection unit (4) comprising a light sensing unit (12) in the form of a sensor or a camera, an encoder, and a light emitting device (13) in the form of a backlight unit (refer to Figure 2) is mounted along the path of the traveling web material (1) in its web material feed/cutting section. The camera, the encoder, and the backlight unit are capable of communicating with a defects management control unit (5). As the web material (1) unwinds from the web material roll (1a), a defects management control unit (5) processes the data received from the defects detection unit (4).

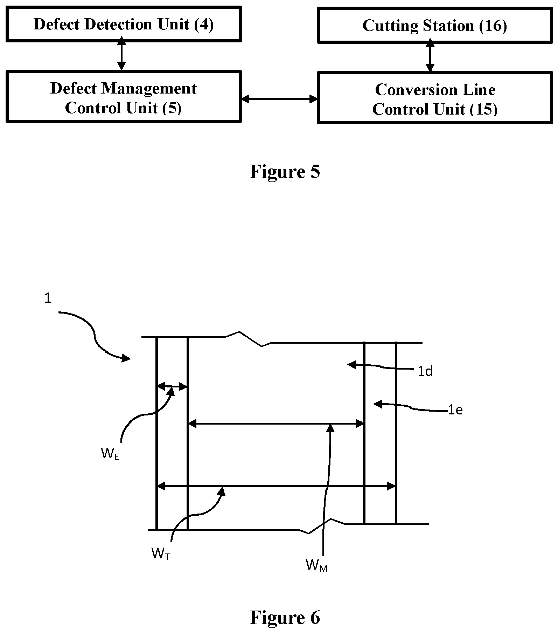

Figure 5 shows the communication protocol between some of the various units of the defects management device (3). Upon detection of any defects (2) or irregularities in any area of the advancing web material (1), a signal is sent by the defect detection unit (4) to the control unit. The location of the defect (2) at the time of its detection is noted.

As the web material (1) travels in the web material feed zone (14a) and if it is defect free, then the web material (1) gets cut into pieces for the purpose of product-making. The changing location of the defect (2) detected by the defects management device (3) on the advancing web material (1) is noted in the memory of the database (3a) of the defects management device (3), finally leading to identification of the piece of web material containing the defect, or defective cut pieces (1c).

As seen from Figure 2, rolls of final web material (1) or fabric are supplied to the conversion systems fitted with the web material defects management device (3) where a web material feed (1a) roller facilitates controlled entry of the web material (1) into the defects management device (3). Additional feed rollers facilitate movement of the web material (1) between various stations (not assigned numbers or shown) of the conversion line (6), such as an opening/folding station, a sealing station, of the conversion line. The provision of the defects detection unit (4) may be made between any two feed rollers depending on the requirement of the user.

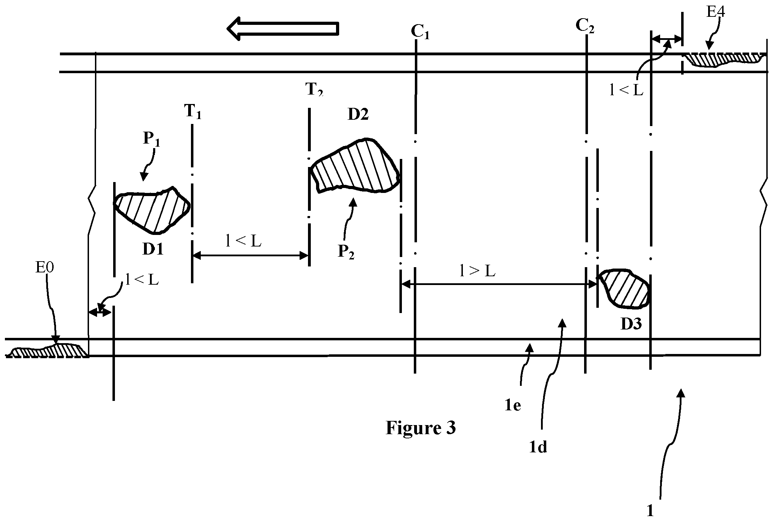

Figure 3 shows a schematic of a web material (1) with a number of defects (2). The defects (2) within the main material (of width W_{M}) are denoted as D1, D2, D3, and so on. Defects (2) within the edge region are denoted as E0, E1, and so on. For consideration of defects as consecutive, the defects (2) may be either from the main fabric or from the edge region.

A provision is also made of a suitable system for monitoring speed of the fabric feed roller using an encoder or similar device which communicates with defects management control unit (5). The feed roller (14) speed determines the speed of web material (1) advancing into the conversion line (6). This in turn determines the speed of the web material (1) travelling through the various parts of the conversion system. It is important to know the speed of web material (1) so that once the defective parts of web material (1) are detected and identified, the movement of the cutter that separates the defective sections (7) of web material from the defects-free sections (8) web material (1), can be controlled to make transverse cuts in the web material (1) at desired locations.

The sensitivity or accuracy of the web defect management device (3) may be set to the individual customer requirement.

Once the defected piece is identified, a PLC logic of the conversion line control unit (15) diverts it onto a path leading to a rejects system located in rejects collection zone (10), where the defective cut pieces are rejected from the system.

The device according to the invention has a completely separate cutting/feed unit which is controlled by a servo-drive unit and a bag forming/joining (sealing or seam making) unit. This enables one to drive the cutting/feed unit at a speed independent of that of the bag forming section.

There is thus a possibility of bag production at full speed even as the defected cut pieces (1c) are being discarded or discharged from the conversion line (6). The defective pieces (1c) to be discarded or rejected are also called rejects. In one aspect of the invention, the rejects are ejected from the conversion line (6).

In another aspect of the invention, the discharge system (not shown) for defective cut pieces may be a conveyor-belt-based system or one based on a clipper or using suitable pneumatic/suction system. The location of the discharge system may be upstream of the bag formation line. The activation of the discharge system is controlled on the basis of the error generated by web defect management device. As illustrated in Figure 1, the direction of travel of the web material (1) as it unrolls from the web material roll (1a) (defined as the longitudinal direction), and that of cut pieces immediately after the web material (1) is cut into pieces is substantially perpendicular to the direction of travel of web material (1) pieces in the bag manufacturing unit/line (defined as transverse direction).

According to the present invention, the defective cut pieces (1c) keep traveling in the original direction of the web material travel from the time of their being cut from the advancing web material (1) until they are collected in the rejects collection zone (10a). However, the normal/defects-free cut pieces (1b) enter the conversion line's downstream process flow or the production flow.

The fact that the travel directions for the cutting/feed section (longitudinal direction - Z) and the bag forming section (transverse direction - X) are different also enables effective separation of defected cut pieces (1c) from the defect-free cut pieces (1b) and effective discharge or rejection/ejection of the defected cut pieces from the conversion system or line (6).

In another aspect of the invention there is provided a servo-driven roller facilitating a controlled actuation of the nip roller (not shown). This enables imparting motion to the defect-free web cut pieces (1b) along the transverse direction to facilitate their progress along the bag formation line while defective cut pieces are send to the rejects collection zone (10a).

All automated systems to make bags or other products from cut pieces of web have a mechanism to 'pick up' cut pieces with the help of a nip roller. The actuation of the nip roller is controlled on the basis of an error signal generated by the web defect management device (3) indicating detection of a defect (2) in the web. Upon detection of a defect, the nip roller is controlled such that it does not 'pick up' the defective cut piece that is passing through the nip location. Specifically, for selection of a defects-free cut piece for bag making purpose, the nip roller is pressed down such that it grips the web material (1) cut piece that is traveling on a conveyor belt. If the nip roller doesn't get pressed down, the web cut piece doesn't get gripped and thus continues its travel into the rejects collection zone.

When a defective section of the web material (7) is detected and the portion of the web material containing defects is cut from the web material roll (1a), the defective piece (1c) is taken out of the process flow. This also means that the frequency of the pieces being fed to the downstream process on the conversion line would change. This would possibly introduce undesirable irregularity in the conversion line processes depending on the number of defective sections (S_{D}) detected and separated. In order to ensure that the defect-free pieces (1b) are fed to the conversion line (6) at a frequency within acceptable predetermined range, the speed of their feeding to the conversion line needs to vary depending on the number of defective pieces detected and separated. This in turn depends on the number of defects (2) and their distribution along the length of the advancing web material (1) which determines the speed of the defect-free pieces (1b) being fed to the conversion line (6) after the cutting operation. The speed is controlled by the defects management device (3) such that the normal or defects-free pieces (8) moving onto the conversion line (6) continue to do so at the set frequency/speed. It is important to maintain the frequency of the defect-free cut pieces (1b) coming onto the bag formation line within a predetermined range so that the conversion line processes are executed unhindered.

The defects (2) may include the following: holes, knots, breakages and overlaps, width (Wm) of web material (1) varying outside the accepted tolerance limit, structural defects in the edge zone (We). For the purpose of the invention, holes may be clubbed into clusters. Defects (2) may be point defects or defect-clusters - all termed as defects for the purpose of this disclosure.

The actual identification of defects (2) using the defects detection unit (3) is carried out as follows. The defects detection unit (3) comprises a light emitting unit (13) and a light sensing unit (12), and a defects management control unit (5) that communicates with the light emitting unit (13) and the light sensing unit (12). The control unit (5) is also capable of communicating with the control unit (15) of the bag conversion line (6). In simplest terms, the light emitting unit (13) emits light which passes through the travelling web material (1). The light that comes out of the travelling web material (1) is sensed by the light sensing unit (12). The web material is scanned through the combined steps of emitting and sensing of light, in other words, the term scanning in the sense of the present disclosure comprises the acts of emitting light and sensing the emitted light that passes through the web material (1). The light sensing unit (12) is capable of sensing the amount and uniformity of the intensity of light on the basis of which the defects identification unit (4) is able to make the determination of whether a defect actually exists.

The light emitting unit (13) comprises at least two light emitters (13a). One that emits light of wavelengths suitable to detect defects within the width of main web material (Wm) and the other one that emits light of wavelengths suitable to detect the edge sections - that is the section that contains extension of the coating material. At any point in time, both light emitters are active. Depending on the nature of expected flaws to be detected, further lines of light emitters emitting light of intensity suitable for detecting specific types of flaws may be provided. The defect detection unit scans the entire width (W_{T}) of the web material (1) by an at least two-line scanning system - one line of light emitters for the defects in the main material and another line of lights for defects in the edge region.

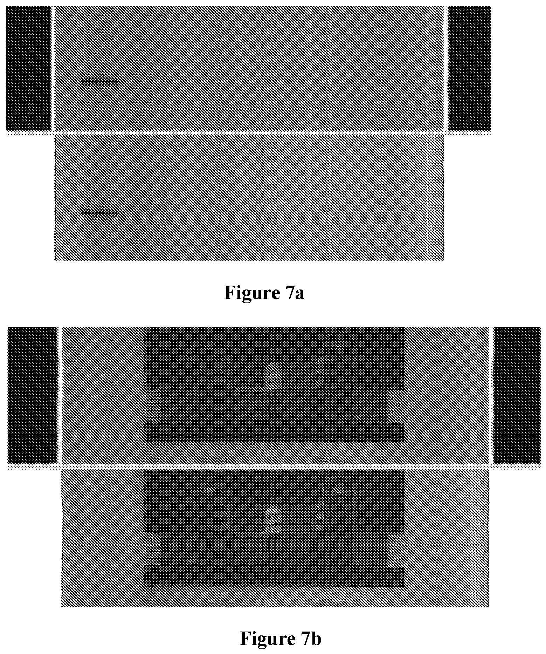

Figures 7, 7A, 8 and 9 show, respectively, the images generated by the device of web material defect management showing defect-free and defective portions of web material.

The light emitters (13a) may be in the form of a gas-based or a filament-based strip light emitting more or less continuous light and which are capable of emitting light over the entire width (Wm) of the main web material. Light emitters (13a) may also be made of discrete individual emitters that cover the entire width of the web material. It is important that emitted light reaches all parts of the web material (1) as the web material passes between the light emitting unit (13) and the light sensing unit (12).

As the light is emitted by the light emitting unit (13) it passes through the web material. The amount and intensity of light received by the sensing unit depends on the obstructions that the emitted light comes across in its travel path from the emitting unit to the sensing unit/device (12). The web material (1) has mechanical and optical properties including opacity (termed as specified opacity) which depends on the raw material from which it is made. The light sensing unit (12) is activated depending on a predetermined speed of fabric feed rollers (14). The opacity varies within the acceptable range of the product specification. However, in the case a defect is present, the opacity of the material at the defect varies from the specified opacity of the material. The defects management device of the invention may be configured for individual web material properties so that the defects determination may be made during the scanning process.

Depending on the structure of web material (1), the light sensing unit/device (12), such as an image camera or a line camera, senses the light coming through web structure in form of small holes. Depending on predetermined parameter set by the individual operators, the defect detection unit (3) evaluates the area of the set of holes and recognize it as normal or defective portion. The light passing through a defect-free portion (8) of a web material (1) is expected to be more or less uniform when it is detected by the sensing unit. Presence of defects (2) either creates opaqueness in the path of the travelling light or it reduces the opaqueness. It is by comparison of the sensed parameters of the received light with the expected values of the parameters that the presence of defects (2) is detected using the data and logic stored in the database (3a) of the defects management device (3).

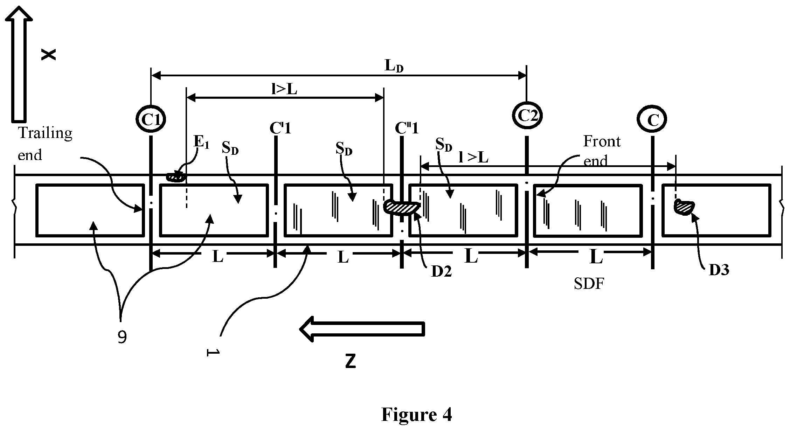

The tube type web material has at least two layers of material. Defects may be present on any or all layers. The defects management device detects defects on all layers. In reference to Figures 3 and 4, if the web material (1) is in the form of a tube, the individual defects shown may be present on any of the layers of the material.

One unique aspect of the defect detection unit is that entire width of the web material (1) is scanned in at one instance. However, in another aspect of the invention, scanning may be done in multiple instances or steps.

The web material defects management device (3) of the invention is also capable of calculating the exact time and or location of the transverse cut that needs to be made in the web material to convert the web material into one or more pieces once a defective or indeed defect-free length is detected. One key object of the invention is to increase the productivity of the bag manufacturing line and minimise wastage. In the case of the web material that carries patterned printing (9), this aspect becomes particularly important. Here, once a defect or a set of defects is detected, a cut in web material needs to be made by considering the defect location as well as the location of the next end of a printed pattern. If the bag is cut within a printed pattern, it will lead to waste of web material. Therefore, the system of invention determines the end of defect or set of defects (see Figure 4) and also the location of the next end of printed pattern and ensures that the cut is made before the start of the next print pattern. In the case, there is no printed pattern, a cut is made after the last defect at a predetermined spacing.

One aspect of the invention is that the movement of the cutter (16a) of the cutting station (16) is halted as soon as a first defect is detected. The cutter remains halted till the time a defect-free web material section has been identified and the location of the web material where the next cut needs to be made arrives in the cutting vicinity of the cutter (16a). The cutting vicinity is a predetermined first distance from the cutter which may depend on the processing speed of the bag making line, the web material type, and other parameters that a person skilled in the art may consider important.

In the case of coated web materials, the coated material extends laterally beyond the edge of the uncoated or the main web material. The total width (W_{T}) of the coated web material (see Figure 6) is the distance between the edges of the coated web material. The defects in the edge region, where only the coating material exists, tend to be of different type than those in the main web material. One key difference in the type of defects arises from the fact that the main web material comprises woven tapes, where the tapes are made typically from opaque or semi-opaque materials, whereas the coating material is much more transparent. Another difference arises from the fact that the coating is applied to the coated web material from a process that is entirely different from the process of making the woven web material from tapes. The light radiation suitable for efficient detection of defects in the edge region and those in the main web material may be different but will be known to a person skilled in the art.

The system of invention provides separate light emission emitters (13a) within the light emitting device (13) for the edge region and the main web material. The defects (2), once identified and detected by the device (3) are also displayed on a monitor (not shown).

Other important parameters on which the determination of the defective web material length and subsequent location of the cut may depend are light type and intensity, required bag length and corresponding length of the defect-free cut piece.

The length of defect-free web material required to make a single bag of predetermined dimensions is termed as the predetermined web material bag piece length L. Defects (2) in a web material (1) may be located anywhere along the web material - they may be in the edge region (1e) where coating of the web material extends, or in the main material (1d) region (see Figure 6). For the purpose of making cuts in the web material that travels in direction Z, it is important to register in database the z co-ordinates of all defects in a manner that allows the defect management control unit to calculate the clear distance between any two consecutive defects (see Figure 3). When the clear length l of web material between two consecutive defects is greater than at least the predetermined length L of the web material piece required to make a bag or any other product of desired dimensions, a cut piece of length greater than or equal to L must be made from such web material length. This would minimise wastage of web material. The system or device (3) of invention is capable of registering the defects locations along the running web material and determining when a web material section (S_{DF}) suitable to make a defect-free cut piece is available.

Similarly, the system of invention is capable of determining the defective section(s) (S_{D}) of web material that should be removed from the production flow on the conversion line (6). As the web material (1) advances and passes between the light emitting device (13) and the light sensing device (12), if there is a defect in the web material (1), the defect management device (3) registers it. It may assign it an identification number. The defects management device (3) has a co-ordinate frame of reference to determine planar co-ordinates of all points on the advancing web material (1) and also the time of registration of defects. As the web material advances past the light emitting device, the defects (2) travel along with the web material (1). The defects management device (3) may include the database (3a) information on identified/registered defect identification number, respective co-ordinates, and time of detection/registration.

In a bag conversion machine or line (1), bags may be made from flat web material or tube type web material. If the starting material is a flat web material, it is converted into a continuous tube material. At some point during the process on the bag conversion line (1), tubes are cut into pieces of predetermined lengths, say L, depending on the bag size. Length L is such that it has sufficient margin for folding and stitching/sealing such that when a bag is made from the piece of length L, it is of the specified dimensions. It is important that entire length L of the piece, measured in the direction of advancement of web material, should be defect-free. As the location and number of defects cannot be controlled, it is important that the web material defects management device identifies defective web material portions that are at least of length L, and preferably integer multiples of L.

Advancing web material (1) may contain a number of defects located randomly (see Figure 3). Any time - after the start of the defect identification process on a web material - a defect is determined, the defect management device registers it in its database as a first defect (D1). When the very next defect is identified, the system acknowledges it as the second defect (D2) and registers it in its database. All defects have finite dimensions. As an example, the positions of two defects along the travelling web material are identified as P1 and P2 in reference to the direction of travel of the web material. The clear length of the web material between the defects at the two positions P1 and P2 is denoted as l. The time of identification of the two defects is denoted as T1 and T2. The web monitoring system calculates the clear length l (in the direction of travel of web material) between the first and the second defects. If l is greater than or equal to L, the monitoring system recognises the section of the web material between the first and second defects as defect-free and registers it as suitable for making a bag. The very first instance of the occurrence of a defect-free length L is registered as the first defect-free length. Once the first defect-free length of the web material advances past the defects detection unit (4), it will, at some point in time, arrive at the cutting station (16) where the web material will be cut transversely to make a web material piece of length L. The locations where cuts would be made in an optimal situation are denoted as Co, C₁, C₂, C₃ in Figure 4.

Defects in the end region are denoted as En (n stands for n^{th} defect). For example, Figure 3 shows E₀ and E₄. For calculation of l, any defects - those from the end region as well as those from the main web material are considered.

If the length l between the two consecutive defects is less than L, the second defect (D2) is reassigned as a first defect (D1). The next consecutive defect is acknowledged as a second defect (D2) and its planar co-ordinates and time of identification recorded. The defects management device (3) once again determines the length l between the new consecutive pair of defects (2) and determines if there exists length L between the two. If l is equal to or greater than L, then the defects management device (3) once again marks the section of the web material as defect-free and suitable for cutting for bag making purpose. If l is less than L, the defects management device determines that the section between the defects D1 and D2 is not suitable for bag making purpose, that is to say it's a defective section (S_{D}) suitable for removing from the process flow of the bag conversion line (6). The defects management device (3) thus continues to look for the next section of defect-free web material of length L.

The web material may come in two categories:
a. It may carry a printed pattern.
b. It may be plain (i.e. without any patterned print) or may carry an unpatterned print.

In the case of a plain web material (1), locations of cuts are the ends of the section defined as having the defect-free length L. Once the defect-free length L has been identified, the time of their passage in front of the light emitting device (13) is noted. On the basis of the speed of the advancing web material (1), the expected time of arrival of the two ends of the defect-free length L at the cutting station (16) is calculated. The cutter (16a) is made operative to make a cut at both ends of the defect-free section. The defects management device (3) calculates the length L_{D} of the defective web material - that is the web material between the trailing end of a defect-free section and the front end of the next consecutive defect-free section of length L. If L_{D} is greater than L, it means that the stretch L_{D} carries equivalent of multiple pieces of bag lengths. However, since the entire stretch L_{D} is defective, there do not need to be made intermediate cuts at length L, but only one cut needs to be made at the trailing end of the stretch of length L_{D}. The defects management device (3) - upon determination that L_{D} is greater than L, send a signal to the controller of the conversion unit to make the cutter inoperative until such time that that the trailing end of the defective piece of length L_{D} arrives at the cutting station (16).

In the case of plain web material (i.e. material without any print pattern), or material with random or patternless printing, the length l suitable for cutting out a defective piece (1c), may be any length including a length less than L.

In the case of a web material carrying a printed pattern of length L_{P}, the defects management device (3) has to find not only a defect-free web material section of length L_{D} which is at least equal to L, but it also needs check whether it coincides with the print pattern. If there is a mismatch between the two, i.e. the web material section of length L and the print pattern do not coincide, the defects management device (3) allows defect-free web material to be identified as defective until the point where L_{D} equals some integer multiple of L. This is illustrated in Figure 4 where from the time the cut C1 is made, the system further encounters defects D1, D2, and D3, and determines the locations of cuts C2 and C3. The decision to make a cut at C2 is made only once the position C3 has passed under the light emitting device (13).

In one embodiment of the invention, the operator of the defects management device (3) may choose not to make the cutting tool inoperative at locations such as C'₁, C"₁.

If there is a variation in the speed of advancing material (1), the defects management device (3) is capable of adjusting the calculation of travel time accordingly.

The defects management device (3) is also capable of determining the length of web material within which not a single continuous defect-free portion of length L exists. The defects management device (3) allows such portions to pass through the web cutter station by making the cutter (16a) inoperative and thereby without making any cut.

In another embodiment, where the web material may not be printed, the cut locations are dependent only on the locations of defects.

Examples of web materials as scanned by the device of defect management are seen from Figures 7A, 7B, 8, and 9. The images are produced by a two-line system of scanning herein one light emitter is used to produce the image of the main web material and another light emitter is used to produce the image of the edge region.

Figures 7A and 7B show the computer images of the defect-free portions of web material as scanned by the device of invention for both web material with printed pattern and without it.. No defects are identified by the device of invention, as none exists

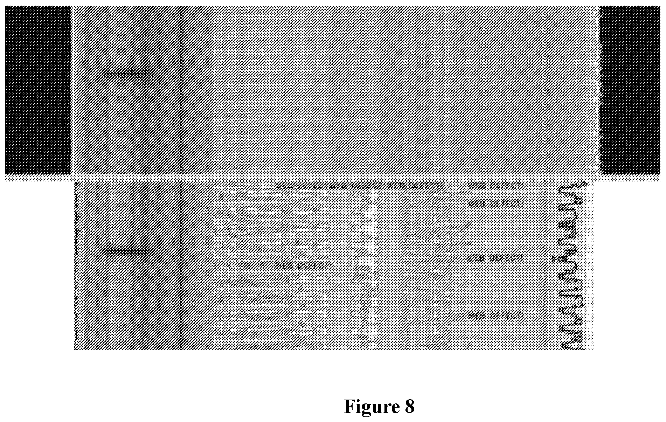

Figures 8 shows the computer images of the defective portions of web material as scanned by the device of invention for web material without print pattern. As seen in the upper half of the image, the device of invention has detected defects in the edge region. As also seen in the lower half of the image, the device of invention has detected defects in the main web material.

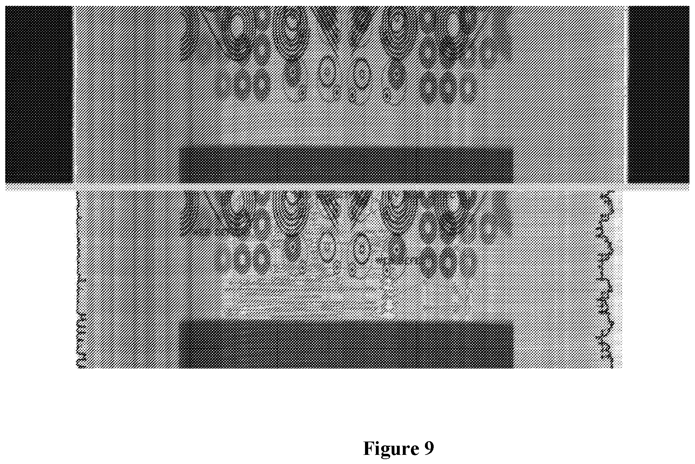

Figures 9 shows the computer images of the defective portions of web material as scanned by the device of invention for web material with print pattern. As seen in the upper half of the image, the device of invention has detected defects in the edge region. As also seen in the lower half of the image, the device of invention has detected defect in the main web material.

## Claims

1. A device to manage defects (2) in advancing web material (1) provided on a conversion line (6), said conversion line (6) having processing stations for making bags from said web material (1), said processing stations comprising pre-cutting processing stations, a cutting station (16), and post-cutting processing stations, and a number of feed rollers (14) that facilitate the movement of said web material (1) between any two stations,
**characterised in that** said device comprises a defects detection unit (4), and a defects management control unit (5),
said defects detection unit (4) being capable of:
- detecting defects on an advancing web, determining positions of cuts to be made on the web material (1),
- communicating with said defects management control unit (5) to maintain a database of defects (2), their locations at the time of detection, and monitoring the progress of defects along the advancing web material (1);
said defects management control unit (5) being capable of:
- communicating with a conversion line control unit (15) to control the cutting operation of the cutting station (16) and any pre-cutting operations of said conversion line (6) to make pieces of defective (1c) and defect-free web material (1b), and
- controlling the separation process of the defective pieces (1c) of web material (1) from the downstream process flow of the conversion line (6), without stopping the advancing web material (1).

2. The device as claimed in claim 1, wherein said defects detection unit (4) comprises a light emitting unit (13) to emit light on to said web material (1), a light sensing unit (12) to sense the emitted light that comes out of said web material (1), and a detection control unit, wherein said light emitting unit (13) comprises at least two light emitters that emit light that passes through said advancing web material (1), said light sensing unit (12) is capable of sensing light that passes through said advancing web material (1), or scanning the web material (1), and determining the existence of a defect.

3. The device as claimed in claim 2, wherein said determining the existence of a defect (2) is made upon determining that the variation in opacity of said web material (1) as calculated on the basis of the volume and intensity of detected light is in variance with specified opacity of the web material (1).

4. The device as claimed in claims 1 to 3, wherein the light emitting unit (13) comprises light emitters that are gas-based or filament based strip lights which are capable of emitting light over the entire width of the web material (1), or comprises discrete individual light emitters that cover the entire width of the web material (1), wherein said light emitting unit (13) preferably has further lines of light emitters emitting light of intensity suitable for detecting specific types of flaws.

5. The device as claimed in claims 2 to 3, wherein said scanning of the web material (1) is done in one instance.

6. The device as claimed in claims 1 to 5, wherein said defects management control unit (5) is capable of calculating the time and/or location of the transverse cut that needs to be made in said web material (1) to convert said material into a defective piece (1c) or a defect-free piece (1b), and wherein said defects detection unit (4) is preferably placed between any two consecutive feed rollers.

7. The device as claimed in claims 1 to 6, wherein said web material (1) is plain or printed with patterned design (9) or with unpatterned design.

8. The device as claimed in claims 1 to 7, wherein after detection of a defect (2), said defect management control unit (5) instructs the conversion line control unit (15) to make the cutting station (16) of said conversion line (6) inoperative until further instruction.

9. The device as claimed in claims 1 to 8, wherein in the case the web material (1) carries a patterned print (9), the defects management control unit (5) ensures that said cutting station (16) does not make a cut within the print zone.

10. The device as claimed in claims 1 to 8, wherein in the case of a plain web material (1) or the web material (1) with unpatterned print, said defects management control unit (5) calculates clear length l between any two consecutive defects (l) and if l is greater than or equal to the length L of web material (1) required to make a bag, it registers said section of web material (1) between the said two defects (2) as defect-free and notifies the control unit of conversion line (15) to operate the cutting station (16) to make a defect-free piece (1b).

11. The device as claimed in claims 1 to 8, wherein in the case of a plain web material (1), said defects management control unit (5) calculates clear length l between any two consecutive defects and if I is less than the length L of web material required to make a bag, the defect management control unit (5) continues to scan the web material (1) until a pair of consecutive defects is detected the clear length between which is greater than L and registers such section of web material (1) as another defects-free section, following which it notifies the control unit of conversion line (15) to operate the cutting station (16) to make a defect-free piece (1b).

12. The device as claimed in claims 10 to 11, wherein if between the two consecutive defects-free sections of web material (8), there exists a section of defective web material (7) of length greater than L, the defects management control unit (5) instructs the conversion line control unit (15) to make a single cut at the trailing end of the section of defective web material (7) and not any cuts in between.

13. The device as claimed in claims 1 to 12, wherein the post-cutting speed of the defect-free pieces (1b) being fed to the conversion line (6) after the cutting operation is controlled on the basis of number of defects (2) and their distribution along the length of the advancing web material (1), wherein said post-cutting speed is preferably variable and maintained within a predetermined range.

14. The device as claimed in claims 1 to 13, wherein once a defect (2) is detected, if there are any of pre-cutting operations like web perforation or holes making, then these operations are disengaged on detection of defective portion in web.

15. A method to manage defects in advancing web material (1) provided on a conversion line (6), said conversion line (6) having processing stations for making bags from said web material (1), said processing stations comprising pre-cutting processing stations, a cutting station (16), and post-cutting processing stations, and a number of feed rollers that facilitate the movement of said web material (1) between two stations,
**characterised in that** said method comprises:
- providing a device to manage defects in advancing web material (1); and
- without stopping said advancing web material (1):
a. detecting defects (2) on an advancing web, determining positions of cuts to be made on the web material (1),
b. communicating with a defects management control unit (5) of the device to maintain a database of defects (2), their locations at the time of detection, and monitoring the progress of defects (2) along the advancing web material (1);
c. communicating with a conversion line control unit (15) to control the cutting operation and the pre-cutting operations of the cutting station (16) of said conversion line (6) to make pieces of defective and defect-free web material (1c and 1b), and
d. controlling the separation process of the defective pieces of web material (7) from the downstream process flow of the conversion line (6);
e. sending defect-free pieces (1b) to downstream processing stations (6a).

## Patentansprüche

1. Vorrichtung zur Handhabung von Fehlern (2) in einem sich vorwärts bewegenden Bahnmaterial (1), das an einer Umwandlungslinie (6) vorgesehen ist, wobei die Umwandlungslinie (6) Verarbeitungsstationen zum Herstellen von Beuteln aus dem Bahnmaterial (1) aufweist, wobei die Verarbeitungsstationen Vorschneide-Verarbeitungsstationen, eine Schneidestation (16) und Nachschneide-Verarbeitungsstationen sowie eine Anzahl von Zufuhrwalzen (14) aufweisen, welche die Bewegung des Bahnmaterials (1) zwischen zwei beliebigen Stationen erleichtern,
**dadurch gekennzeichnet, dass** die Vorrichtung eine Fehlererkennungseinheit (4) und eine Fehlermanagement-Steuereinheit (5) aufweist,
wobei die Fehlererkennungseinheit (4) in der Lage ist zum:
- Erkennen von Fehlern an einer sich vorwärts bewegenden Bahn, Bestimmen von Positionen von Schnitten, die an dem Bahnmaterial (1) vorgenommen werden sollen,
- Kommunizieren mit der Fehlermanagement-Steuereinheit (5), um eine Datenbank von Fehlern (2), deren Positionen zum Zeitpunkt der Erkennung zu führen, und Überwachen des Fortschreitens von Fehlern entlang des sich vorwärts bewegenden Bahnmaterials (1);
wobei die Fehlermanagement-Steuereinheit (5) in der Lage ist zum:
- Kommunizieren mit einer Umwandlungslinien-Steuereinheit (15), um den Schneidevorgang der Schneidestation (16) und alle Vorschneidevorgänge der Umwandlungslinie (6) zu steuern, um Stücke aus fehlerhaftem (1c) und fehlerfreiem Bahnmaterial (1b) herzustellen, und
- Steuern des Trennprozesses der fehlerhaften Stücke (1c) des Bahnmaterials (1) von dem stromabwärtigen Prozessfluss der Umwandlungslinie (6), ohne das sich vorwärts bewegende Bahnmaterial (1) zu stoppen.

2. Vorrichtung nach Anspruch 1, wobei die Fehlererkennungseinheit (4) eine lichtemittierende Einheit (13), um Licht auf das Bahnmaterial (1) zu emittieren, eine Lichtsensoreinheit (12) zum Sensieren des emittierten Lichts, das aus dem Bahnmaterial (1) kommt, sowie eine Erkennungssteuereinheit aufweist, wobei die Lichtemissionseinheit (13) zumindest zwei Lichtemitter aufweist, die Licht emittieren, das durch das sich vorwärts bewegende Bahnmaterial (1) hindurchtritt, die Lichtsensoreinheit (12) in der Lage ist, Licht zu sensieren, das durch das sich vorwärts bewegende Bahnmaterial (1) hindurchtritt, oder das Bahnmaterial (1) abzutasten, und das Vorhandensein eines Fehlers zu bestimmen.

3. Vorrichtung nach Anspruch 2, wobei das Bestimmen des Vorhandenseins eines Fehlers (2) erfolgt, wenn bestimmt wird, dass die auf Grundlage des Volumens und der Intensität von detektiertem Licht berechnete Schwankung der Opazität des Bahnmaterials (1) von einer vorgegebenen Opazität des Bahnmaterials (1) abweicht.

4. Vorrichtung nach einem der Ansprüche 1 bis 3, wobei die Lichtemissionseinheit (13) Lichtemitter aufweist, die gasbasierte oder fadenbasierte Streifenlichter sind, die in der Lage sind, Licht über die gesamte Breite des Bahnmaterials (1) zu emittieren, oder diskrete einzelne Lichtemitter aufweist, welche die gesamte Breite des Bahnmaterials (1) abdecken, wobei die Lichtemissionseinheit (13) bevorzugte weitere Linien von Lichtemittern aufweist, die Licht mit einer Intensität emittieren, die zum Erkennen von bestimmten Arten von Mängeln geeignet ist.

5. Vorrichtung nach einem der Ansprüche 2 bis 3, wobei das Abtasten des Bahnmaterials (1) auf einmal erfolgt.

6. Vorrichtung nach einem der Ansprüche 1 bis 5, wobei die Fehlermanagement-Steuereinheit (5) in der Lage ist, die Zeit und/oder die Position des Querschnitts zu berechnen, der in dem Bahnmaterial (1) vorgenommen werden muss, um das Material in ein fehlerhaftes Stück (1c) oder ein fehlerfreies Stück (1b) umzuwandeln, und wobei die Fehlererkennungseinheit (4) bevorzugt zwischen zwei beliebigen aufeinanderfolgenden Zufuhrwalzen platziert ist.

7. Vorrichtung nach einem der Ansprüche 1 bis 6, wobei das Bahnmaterial (1) glatt oder mit gemustertem Design (9) oder mit nicht gemustertem Design bedruckt ist.

8. Vorrichtung nach einem der Ansprüche 1 bis 7, wobei nach Erkennen eines Fehlers (2) die Fehlermanagement-Steuereinheit (5) die Umwandlungslinien-Steuereinheit (15) anweist, die Schneidestation (16) der Umwandlungslinie (6) bis zu einer weiteren Anweisung außer Betrieb zu setzen.

9. Vorrichtung nach den Ansprüchen 1 bis 8, wobei in dem Fall, dass das Bahnmaterial (1) einen gemusterten Druck (9) trägt, die Fehlermanagement-Steuereinheit (5) sicherstellt, dass die Schneidestation (16) keinen Schnitt innerhalb der Druckzone ausführt.

10. Vorrichtung nach den Ansprüchen 1 bis 8, wobei im Fall eines glatten Bahnmaterials (1) oder des Bahnmaterials (1) mit nicht-gemustertem Druck die Fehlermanagement-Steuereinheit (5) eine lichte Länge l zwischen beliebigen zwei aufeinanderfolgenden Fehlern (l) berechnet, und falls l größer oder gleich der zur Herstellung eines Beutels erforderlichen Länge L des Bahnmaterials (1) ist, es den Abschnitt des Bahnmaterials (1) zwischen den beiden Fehlern (2) als fehlerfrei registriert und die Steuereinheit der Umwandlungslinie (15) benachrichtigt, die Schneideeinheit (16) zu betreiben, um ein fehlerfreies Stück (1b) herzustellen.

11. Vorrichtung nach den Ansprüchen 1 bis 8, wobei im Falle eines glatten Bahnmaterials (1) die Fehlermanagement-Steuereinheit (5) die lichte Länge l zwischen zwei beliebigen aufeinanderfolgenden Fehlern berechnet und, falls l kleiner als die Länge L an Bahnmaterial ist, die benötigt wird, um einen Beutel herzustellen, die Fehlermanagement-Steuereinheit (5) damit fortfährt, das Bahnmaterial (1) abzutasten, bis ein Paar aufeinanderfolgender Fehler erkannt wird, deren lichte Länge größer als L ist, und diesen Abschnitt des Bahnmaterials (1) als einen weiteren fehlerfreien Abschnitt registriert, woraufhin sie die Steuereinheit der Umwandlungslinie (15) benachrichtigt, die Schneidestation (16) zu betreiben, um ein fehlerfreies Stück (1b) herzustellen.

12. Vorrichtung nach einem der Ansprüche 10 bis 11, wobei, falls zwischen den zwei aufeinanderfolgenden fehlerfreien Abschnitten von Bahnmaterial (8) ein Abschnitt fehlerhaften Bahnmaterials (7) mit einer Länge größer als L existiert, die Fehlermanagement-Steuereinheit ( 5) die Umwandlungslinien-Steuereinheit (15) anweist, einen einzelnen Schnitt an dem hinteren Ende des Abschnitts fehlerhaften Bahnmaterials (7) und keine Schnitte dazwischen vorzunehmen.

13. Vorrichtung nach den Ansprüchen 1 bis 12, wobei die Nachschneidegeschwindigkeit der fehlerfreien Stücke (1b), die der Umwandlungslinie (6) nach dem Schneidevorgang zugeführt werden, auf Grundlage der Anzahl von Fehlern (2) und deren Verteilung entlang der Länge des sich vorwärts bewegenden Bahnmaterials (1) gesteuert wird, wobei die Nachschneidegeschwindigkeit bevorzugt variabel ist und innerhalb eines vorbestimmten Bereichs gehalten wird.

14. Vorrichtung nach einem der Ansprüche 1 bis 13, wobei, sobald ein Fehler (2) erkannt wird, falls Vorschneidevorgänge wie Bahnperforation oder Lochherstellung vorhanden sind, dann diese Vorgänge bei Erkennen eines fehlerhaften Abschnitts in der Bahn deaktiviert werden.

15. Verfahren zum Handhaben von Fehlern in einem sich vorwärts bewegenden Bahnmaterial (1), das an einer Umwandlungslinie (6) vorgesehen ist, wobei die Umwandlungslinie (6) Verarbeitungsstationen zum Herstellen von Beuteln aus dem Bahnmaterial (1) aufweist, wobei die Verarbeitungsstationen Vorschneide-Verarbeitungsstationen, eine Schneidestation (16) und Nachschneide-Verarbeitungsstationen sowie eine Anzahl von Zufuhrwalzen aufweist, welche die Bewegung des Bahnmaterials (1) zwischen zwei Stationen erleichtern, **dadurch gekennzeichnet, dass** das Verfahren umfasst:
- Bereitstellen einer Vorrichtung zum Handhaben von Fehlern in sich vorwärts bewegendem Bahnmaterial (1);
- ohne Stoppen des sich vorwärts bewegenden Bahnmaterials (1):
a. Detektieren von Fehlern (2) an einer sich vorwärts bewegenden Bahn, Bestimmen von Positionen von Schnitten, die an dem Bahnmaterial (1) vorzunehmen sind,
b. Kommunizieren mit einer Fehlermanagement-Steuereinheit (5) der Vorrichtung, um eine Datenbank von Fehlern (2), deren Positionen zum Zeitpunkt des Erkennens zu führen, und Überwachen des Fortschreitens von Fehlern (2) entlang des sich vorwärts bewegenden Bahnmaterials (1);
c. Kommunizieren mit einer Umwandlungslinien-Steuereinheit (15), um den Schneidevorgang und die Vorschneidevorgänge der Schneidestation (16) der Umwandlungslinie (6) zu steuern, um Stücke aus fehlerhaftem und fehlerfreiem Bahnmaterial (1c und 1b) herzustellen, und
d. Steuern des Trennprozesses der fehlerhaften Stücke von Bahnmaterial (7) von dem stromabwärtigen Prozessfluss der Umwandlungslinie (6);
e. Senden von fehlerfreien Stücken (1b) an stromabwärtige Verarbeitungsstationen (6a).

## Revendications

1. Dispositif de gestion de défauts (2) dans un matériau en bande (1) avançant fourni sur une ligne de conversion (6), ladite ligne de conversion (6) présentant des postes de traitement permettant de fabriquer des sacs à partir dudit matériau en bande (1), lesdits postes de traitement comprenant des postes de traitement de pré-découpe, un poste de découpe (16), des postes de traitement de post-découpe, et un nombre de rouleaux d'alimentation (14) qui facilitent le déplacement dudit matériau en bande (1) entre deux postes quelconques,
**caractérisé en ce que** ledit dispositif comprend une unité de détection de défauts (4), et une unité de commande de gestion de défauts (5),
ladite unité de détection de défauts (4) pouvant :
- détecter des défauts sur une bande avançant, déterminer des positions de découpes à réaliser sur le matériau en bande (1),
- communiquer avec ladite unité de commande de gestion de défauts (5) pour maintenir une base de données de défauts (2), de leurs emplacements au moment de la détection, surveiller la progression de défauts le long du matériau en bande (1) avançant ;
ladite unité de commande de gestion de défauts (5) pouvant :
- communiquer avec une unité de commande de ligne de conversion (15) pour commander l'opération de découpe du poste de découpe (16) et toute opération de pré-découpe de ladite ligne de conversion (6) pour fabriquer des pièces de matériau en bande défectueux (1c) et de matériau en bande sans défaut (1b), et
- commander le processus de séparation des pièces défectueuses (1c) de matériau en bande (1) du flux de processus en aval de la ligne de conversion (6) sans arrêter le matériau en bande (1) avançant.

2. Dispositif selon la revendication 1, dans lequel ladite unité de détection de défauts (4) comprend une unité d'émission de lumière (13) pour émettre de la lumière sur ledit matériau en bande (1), une unité de détection de lumière (12) pour détecter la lumière émise sortant dudit matériau en bande (1), et une unité de commande de détection, dans lequel ladite unité d'émission de lumière (13) comprend au moins deux émetteurs de lumière qui émettent de la lumière traversant ledit matériau en bande (1) avançant, et ladite unité de détection de lumière (12) peut détecter de la lumière traversant ledit matériau en bande (1) avançant, ou balayer le matériau en bande (1) et déterminer la présence d'un défaut.

3. Dispositif selon la revendication 2, dans lequel ladite détermination de la présence d'un défaut (2) est effectuée en déterminant que la variation de l'opacité dudit matériau en bande (1) telle que calculée sur la base du volume et de l'intensité de la lumière détectée ne concorde pas avec l'opacité spécifiée du matériau en bande (1).

4. Dispositif selon les revendications 1 à 3, dans lequel l'unité d'émission de lumière (13) comprend des émetteurs de lumière qui sont des bandes lumineuses à base de gaz ou de filament qui peuvent émettre de la lumière sur la totalité de la largeur du matériau en bande (1), ou comprend des émetteurs de lumière individuels discrets qui couvrent la totalité de la largeur du matériau en bande (1), dans lequel ladite unité d'émission de lumière (13) présente de manière préférée en outre des lignes d'émetteurs de lumière émettant de la lumière d'une intensité adaptée pour détecter des types de défauts spécifiques.

5. Dispositif selon les revendications 2 à 3, dans lequel ledit balayage du matériau en bande (1) est effectué dans un cas.

6. Dispositif selon les revendications 1 à 5, dans lequel ladite unité de commande de gestion de défaut (5) peut calculer le moment et/ou l'emplacement de la découpe transversale qui doit être réalisée dans ledit matériau en bande (1) pour convertir ledit matériau en une pièce défectueuse (1c) ou une pièce sans défaut (1b), et dans lequel ladite unité de détection de défauts (4) est placée de manière préférée entre deux rouleaux d'alimentation se suivant quelconques.

7. Dispositif selon les revendications 1 à 6, dans lequel ledit matériau en bande (1) est vierge ou est imprimé avec un motif (9) ou sans motif.

8. Dispositif selon les revendications 1 à 7, dans lequel après la détection d'un défaut (2), l'unité de commande de gestion de défauts (5) ordonne à l'unité de commande de ligne de conversion (15) de rendre le poste de découpe (16) de ladite ligne de conversion (6) inopérant jusqu'à instruction supplémentaire.

9. Dispositif selon les revendications 1 à 8, dans lequel si le matériau en bande (1) porte une impression à motifs (9), l'unité de commande de gestion de défauts (5) garantit que ledit poste de découpe (16) ne réalise aucune découpe au sein de la zone d'impression.

10. Dispositif selon les revendications 1 à 8, dans lequel dans le cas d'un matériau en bande (1) vierge ou le matériau en bande (1) avec une impression sans motif, ladite unité de commande de gestion de défauts (5) calcule la longueur l entre deux défauts (l) quelconques se suivant et si l est supérieure ou égale à la longueur L du matériau en bande (1) requise pour fabriquer un sac, il enregistre ladite section de matériau en bande (1) entre lesdits deux défauts (2) comme sans défaut et notifie à l'unité de commande de la ligne de conversion (15) de faire fonctionner le poste de découpe (16) pour fabriquer une pièce sans défaut (1b).

11. Dispositif selon les revendications 1 à 8, dans lequel dans le cas d'un matériau en bande (1) vierge, ladite unité de commande de gestion de défauts (5) calcule la longueur intérieure l entre deux défauts se suivant quelconques et si l est inférieure à la longueur L du matériau en bande requise pour fabriquer un sac, l'unité de commande de gestion de défaut (5) continue à balayer le matériau en bande (1) jusqu'à ce qu'une paire de défauts se suivant l'un l'autre soit détectée, la longueur intérieure entre eux étant supérieure à L et enregistre un tel tronçon de matériau en bande (1) en tant qu'une autre section sans défaut, après quoi elle notifie à l'unité de commande de ligne de conversion (15) de faire fonctionner le poste de découpe (16) pour fabriquer des pièces sans défaut (1b).

12. Dispositif selon les revendications 10 à 11, dans lequel s'il existe entre les deux sections se suivant sans défaut du matériau en bande (8) une section de matériau en bande défectueux (7) d'une longueur supérieure à L, l'unité de commande de gestion de défauts (5) ordonne à l'unité de commande de ligne de conversion (15) de réaliser une unique découpe sur l'extrémité arrière de la section du matériau en bande (7) défectueux et non des coupes intercalées.

13. Dispositif selon les revendications 1 à 12, dans lequel la vitesse de post-découpe des pièces sans défaut (1b) alimentées dans la ligne de conversion (6) après l'opération de découpe est commandée sur la base du nombre de défauts (2) et leur distribution le long de la longueur du matériau en bande (1) avançant, dans lequel ladite vitesse de poste-découpe est de manière préférée variable et maintenue dans une plage prédéterminée.

14. Dispositif selon les revendications 1 à 13, dans lequel en cas de détection d'un défaut (2), en présence d'un nombre quelconque d'opérations de pré-découpe comme la perforation de bande ou la réalisation de trous, ces opérations sont alors interrompues sur détection d'une portion défectueuse de la bande.

15. Procédé de gestion de défauts dans un matériau en bande (1) avançant fourni sur une ligne de conversion (6), ladite ligne de conversion (6) présentant des postes de traitement pour fabriquer des sacs à partir dudit matériau en bande (1), lesdits postes de traitement comprenant des postes de traitement de pré-découpe, un poste de découpe (16) et des postes de traitement de post-découpe, et un nombre de rouleaux d'alimentation qui facilitent le déplacement dudit matériau en bande (1) entre deux postes,
**caractérisé en ce que** ledit procédé comprend :
- la fourniture d'un dispositif pour surveiller des défauts dans un matériau en bande (1) avançant ; et
- sans arrêt ledit matériau en bande (1) avançant :
a. la détection de défauts (2) sur la bande avançant, la détermination d'emplacements de découpes à réaliser sur le matériau en bande (1),
b. la communication avec une unité de commande de gestion de défauts (5) du dispositif pour maintenir une base de données de défauts (2), de leurs emplacements au moment de la détection, et le suivi de la progression de défauts (2) le long du matériau en bande (1) avançant ;
c. la communication avec une unité de commande de ligne de conversion (15) pour commander l'opération de découpe et les opérations de pré-découpe du poste de découpe (16) de ladite ligne de conversion (6) pour fabriquer des pièces de matériau en bande défectueux et sans défaut (1c et 1b), et
d. la commande du processus de séparation des pièces défectueuse du matériau en bande (7) du flux de traitement en aval de la ligne de conversion (6) ;
e. l'envoi de pièces sans défaut (1b) vers des postes de traitement en aval (6a).
